# EUROPÄISCHE PATENTSCHRIFT

(11) **EP 1 993 742 B1**
(45) Veröffentlichungstag und Bekanntmachung des Hinweises auf die Patenterteilung: **24.02.2016**
(21) Anmeldenummer: 07726731.8
(22) Anmeldetag: 09.03.2007
(51) Int. Cl.: G01F 1/66, G10K 11/00

(54) **VORRICHTUNG ZUR BESTIMMUNG UND/ODER ÜBERWACHUNG DES VOLUMEN- ODER DES MASSEDURCHFLUSSES EINES MEDIUMS IN EINER ROHRLEITUNG**
DEVICE FOR DETERMINING AND/OR MONITORING THE VOLUME OR MASS FLOW RATE OF A MEDIUM IN A PIPE CONDUIT
DISPOSITIF POUR DÉTERMINER ET/OU SURVEILLER LE DÉBIT VOLUMIQUE OU MASSIQUE D'UNE SUBSTANCE DANS UNE CONDUITE TUBULAIRE

(30) Priorität: 14.03.2006 DE 102006012114
(43) Veröffentlichungstag der Anmeldung: 26.11.2008
(73) Patentinhaber: Endress+Hauser Flowtec AG, 4153 Reinach (CH)
(72) Erfinder: BERBERIG, Oliver, 79639 Grenzach-Wyhlen (DE); BERGER, Andreas, CH-4153 Reinsch (CH); OUDOIRE, Patrick, F-68360 Soultz (FR); WIEST, Achim, 79576 Weil am Rhein (DE)
(74) Vertreter: Andres, Angelika Maria
(86) Internationale Anmeldenummer: PCT/EP2007/052208
(87) Internationale Veröffentlichungsnummer: WO 2007/104708

(56) Entgegenhaltungen:
- EP-A- 1 235 056
- GB-A- 2 086 183
- US-A- 4 333 352
- US-A- 5 179 862
- US-A- 5 179 862
- US-B1- 6 626 049

## Beschreibung

Die Erfindung betrifft ein Clamp-On Ultraschall-Durchflussmessgerät zur Bestimmung und/oder Überwachung des Volumen- oder des Massedurch-flusses eines Mediums, das eine Rohrleitung in Richtung der Längsachse der Rohrleitung durchströmt, mit zumindest einen Ultraschallsensor, der Ultraschall-Messsignale unter einem Einstrahl-/Ausfallwinkel in die Rohrleitung einstrahlt bzw. aus der Rohrleitung empfängt und mit einer Regel-/Auswerte-einheit, die anhand der Ultraschall-Messsignale den Volumen-und/oder Massedurchfluss des Mediums durch die Rohrleitung bestimmt.

Ultraschall-Durchflussmessgeräte der zuvor genannten Art werden vielfach in der Prozess- und Automatisierungstechnik eingesetzt. Sie erlauben es, den Volumen- und/ oder Massedurchfluss eines Mediums in einer Rohrleitung berührungslos zu bestimmen. Clamp-On Durchflussmessgeräte sind beispielsweise in der US-A-5 179 862, in der EP 0 686 255 B1, der US-PS 4,484,478 oder der US-PS 4,598,593 beschrieben. Weiterhin werden von der Anmelderin Clamp-On Durchflussmessgeräte, die nach dem Laufzeitdifferenzverfahren arbeiten, unter der Bezeichnung PROSONIC FLOW angeboten und vertrieben.

Beim Laufzeitdifferenzverfahren wird die unterschiedliche Laufzeit von Ultraschall-Messsignalen in Strömungsrichtung und entgegen der Strömungs-lichtung des Mediums ausgewertet. Aus der Laufzeitdifferenz der Ultraschall-Messsignale lässt sich die Fließgeschwindigkeit und damit bei bekanntem Durchmesser der Rohrleitung der Volumendurchfluss bzw. bei bekannter oder gemessener Dichte des Mediums der Massedurchfluss bestimmen.

Beim Doppler-Prinzip werden Ultraschall-Messsignale mit einer vorgegebenen Frequenz in das strömende Medium eingekoppelt. Die in dem Medium reflektierten Ultraschall-Messsignale werden ausgewertet. Anhand einer zwischen dem eingestrahlten und dem reflektierten Ultraschall-Messsignal auftretenden Frequenzverschiebung lässt sich ebenfalls die Strömungs-geschwindigkeit des Mediums bzw. der Volumen und/oder Massedurchfluss bestimmen.

Der Einsatz von Durchflussmessgeräten, die nach dem Doppler-Prinzip arbeiten, ist nur möglich, wenn in einem flüssigen Medium Luftbläschen oder Verunreinigungen vorhanden sind, an denen die Ultraschall-Messsignale reflektiert werden. Damit ist der Einsatz derartiger Ultraschall-Durchfluss-messgeräte im Vergleich zu den Ultraschall-Durchflussmessgeräten, die z. B. nach.dem Laufzeitdifferenz-Prinzip arbeiten, relativ stark beschränkt.

Bei Ultraschall-Durchflussmessgeräten, wenn sie nach dem Laufzeitdifferenz-, dem Doppler- oder dem Kreuzkorrelationsverfahren arbeiten, werden die Ultraschäll-Messsignale unter einem vorgegebenen Winkel in die Rohrleitung bzw. in das Messrohr, in der bzw. in dem sich das strömende Medium befindet, ein- und ausgekoppelt. Um eine optimale Impedanzanpassung und damit eine optimale Ein-und Auskopplung zu erreichen, werden die Ultraschall-Messsignale über einen Vorlaufkörper bzw. einen Koppelkeil in die Rohrleitung eingekoppelt bzw. aus der Rohrleitung bzw. aus dem Messrohr ausgekoppelt. Hauptbestandteil eines Ultraschallsensors ist zumindest ein piezoelektrisches Element, welches die Ultraschall-Messsignale in einem definierten Frequenzbereich erzeugt und/oder empfängt.

Die in einem piezoelektrischen Element erzeugten Ultraschall-Messsignale werden über einen Koppelkeil bzw. einen Vorlaufkörper und die Rohrwand in das fluide Medium geleitet. Bei dem Medium handelt es sich entweder um eine Flüssigkeit oder um ein Gas. Aufgrund der relativ stark von dem Medium abhängigen Schallgeschwindigkeit kommt es an der Grenzfläche zweier unterschiedlicher Medien zu einer Brechung der Ultraschall-Messsignale. Der jeweilige Brechungswinkel errechnet sich nach dem Snellius Gesetz, d.h der Brechungswinkel ist abhängig von dem Verhältnis der Ausbreitungs-geschwindigkeiten der beiden aneinander grenzenden Medien.

Besonders problematisch gestaltet sich die Ein- und Auskopplung der Ultraschall-Messsignale, wenn die Rohrleitung aus Metall gefertigt ist und in der Rohrleitung ein gasförmiges Medium strömt. Da die akustische Impedanz eines Metalls und eines Gases üblicherweise um mehrere Größenordnungen auseinander liegen, wird an der Grenzfläche sowohl beim Einkoppeln als auch beim Auskoppeln ein Großteil der Ultraschall-Messsignale rückreflektiert. Der rückreflektierte Anteil ist so groß, dass mit einem konventionellen Ultraschall-sensor keine verlässliche Durchflussmessung möglich ist. Treten dann noch zusätzlich Fehlerquellen auf, die beispielsweise mit der Installation und Montage oder mit Änderungen der Umgebungsbedingungen zusammen-hängen, so ist ein herkömmliches Ultraschall-Durchflussmessgerät für die jeweilige Applikation ungeeignet.

Clamp-On Ultraschallsensoren für Ultraschall-Durchflussmessgeräte benötigen zur Ein-bzw. Auskopplung des Ultraschall-Messsignals einen direkten Kontakt zur Rohrleitung. Insbesondere darf sich zwischen Ultraschallsensor und Rohrleitung keine weitere Grenzschicht aus Gas bzw. aus Luft befinden. Die ein-/ausgekoppelte Leistung ist bei vergleichbarer Leistungsdichte um so größer, je größer die Kontaktfläche zwischen dem Ultraschallsensor und der Rohrleitung ist. Zur Verbesserung der ein- bzw. ausgekoppelten Leistung ist es bekannt geworden, die Kontakfläche des Ultraschallsensors der Oberfläche der Rohrleitung anzupassen oder pastöse oder plastische Koppelmedien zwischen dem Ultraschallsensor und der Rohrleitung vorzusehen. Lösungen, wo zwischen Ultraschallsensor und Rohrleitung geeignete Kunststofffolien angebracht sind, gehören gleichfalls zum Stand der Technik.

Wie bereits erwähnt, wird bei Rohrleitungen mit kleineren Nennweiten bzw. mit kleinem Außendurchmesser nur ein Bruchteil der ein- oder auszu-koppelnden Ultraschall-Messsignale effektiv ein- bzw. ausgekoppelt, wenn die Kontaktfläche zwischen Ultraschallsensor und Rohrleitung flach ist. Wird eine der Rohrleitung angepasste, gekrümmte Kontaktfläche verwendet, so werden die Ultrschall-Messsignale zwar mit einem höheren Wirkungsgrad ein- bzw. ausgekoppelt, aber der Ultraschallsensor ist aufgrund des speziellen Designs optimal nur für die jeweilige Nennweite bzw. den jeweiligen Außendurch-messer der Rohrleitung ausgelegt. Dies bedeutet, dass für jede Nennweite bzw. für jeden Außendurchmesser der Rohrleitung ein entsprechend angepasster Ultraschallsensor konstruiert werden muss.

Der Erfindung liegt die Aufgabe zugrunde, ein kostengünstiges, effizientes Clamp-On Durchflussmessgerät vorzuschlagen, das einfach an einer Rohrleitung zu montieren ist.

Die Aufgabe wird durch ein Clamp-On Durchflussmessgerät mit zumindest einem Ultraschallsensor gelöst, der die folgenden Komponenten aufweist: zumindest ein schallerzeugendes Element, einen Vorlaufkörper und einen Koppeladapter. Der dem Vorlaufkörper zugewandte Endbereich des Koppeladapters weist einen Befestigungsmechanismus zur lösbaren Befestigung des Koppeladapters am Vorlaufkörper auf und ist in Abhängigkeit von der Rohrleitung so ausgestaltet, dass er formschlüssig an der Rohrleitung befestigbar ist.

Bei dem Befestigungsmechanismus handelt es sich um einen Einklips- oder Steckmechanismus. Diese Mechanismen erlauben eine einfache Montage des Koppeladapters an dem Vorlaufkörper.

Insbesondere ist vorgesehen, dass im Falle der Verwendung von zwei Ultraschallsensoren der Koppeladapter so ausgestaltet ist, dass die beiden Ultraschallsensoren in einem definierten Abstand zueinander an dem Koppeladapter befestigt sind.

Gemäß einer vorteilhaften Weiterbildung der erfindungsgemäßen Vorrichtung ist zwischen dem Vorlaufkörper und dem Koppeladapter eine erste Schicht aus einem Koppelmedium vorgesehen. Darüber hinaus wird vorgeschlagen, zwischen dem Koppeladapter und der Rohrleitung eine zweite Schicht eines Koppelmediums anzuordnen. Die beiden Schichten dienen dazu, den Impedanzsprung zwischen zwei aneinandergrenzenden Medien zu minimieren.

Eine bevorzugte Ausgestaltung der erfindungsgemäßen Lösung sieht vor, dass der Koppeladapter aus zwei Teilelementen besteht. Beide Teilelemente sind beispielsweise hinsichtlich der Materialwahl und des Designs so ausgestaltet, dass Temperatureinflüsse näherungsweise kompensiert werden.

Um eine optimale Übertragung der Ultraschall-Messsignale in die Rohrleitung zu gewährleisten, ist der Koppeladapter als fokussierende Linse ausgestaltet.

Es sind bereits Lösungen bekannt geworden, bei denen ein Ultraschallsensor die Ultraschall-Messsignale gebündelt in die Rohrleitung einstrahlt. Beispiele für bekannte fokussierende Ultraschallsensoren sind in der US-PS 4,205,686 und in der US-PS 4,184,094 genannt. Bei beiden bekannten Lösungen ist das piezoelektrische Element konkav oder konvex ausgebildet.

Gemäß einer vorteilhaften Weiterbildung der erfindungsgemäßen Vorrichtung sind der Koppeladapter und der Vorlaufkörper aus dem gleichen Material oder aus Materialien mit ähnlichen akustischen Eigenschaften gefertigt. Gleiches gilt auch für die Wandung der Rohrleitung. Besteht die Rohrleitung aus Stahl, so sollten auch der Vorlaufkörper und der Koppeladapter aus Stahl gefertigt sein. Besteht die Rohrleitung aus Kunststoff, z.B. aus PAI, so sollten auch der Koppeladapter und der Vorlaufkörper aus diesem Kunststoff gefertigt sein. Besteht die Rohrleitung aus Stahl und der Vorlaufkörper aus Kunststoff (z.B. PAI), so kann der Koppeladapter aus Aluminium oder Titan gefertigt sein.

Insbesondere ist der Koppeladapter in Abhängigkeit von dem Material und/oder der Geometrie der Rohrwand so ausgestaltet, dass die Reflexion der Ultraschall-Messsignale bei Einkopplung in die Rohrleitung bzw. bei Auskopplung aus der Rohrleitung näherungsweise Null bzw. minimal ist. Gemäß einer ersten Ausgestaltung der erfindungsgemäßen Vorrichtung wird vorgeschlagen, dass die Dicke von Koppeladapter und Wandung der Rohrleitung so gewählt ist, dass Sie optimal an die Wellenlänge der Ultraschall-Messsignale angepasst ist. Im Prinzip ist die Dicke von Koppeladapter und Rohrwand abhängig von dem Material - hier insbesondere von dem E-Modul, der Dichte und der Querkontraktion des Materials -, der Wellenlänge bzw. der Frequenz der Ultraschall-Messsignale und dem Einstrahl-/Ausfallwinkel, unter dem die Ultraschall-Messsignale durch die Wandung in die Rohrleitung bzw. aus der Rohrleitung ausgestrahlt werden. Es hat sich herausgestellt, dass die Dicke von Koppeladapter und Wandung der Rohrleitung mindestens dem dreifachen Wert der Wellenlänge der Ultraschall-Messsignale entsprechen sollte. Ist das Material beispielsweise Stahl mit einer transversalen Schallgeschwindigkeit von 3200 m/sec und haben die Ultraschall-Messsignale eine Wellenlänge von 1.6mm, so empfiehlt es sich, den Koppeladapter und die Wandung der Rohrleitung mindestens 4.8mm dick zu machen. Dadurch wird sichergestellt, dass sich nur ein minimierter Anteil der Ultraschall-Messsignale in der Wandung der Rohrleitung ausbreitet. Eine alternative Ausgestaltung, die gleichfalls die Ausbildung von Transversal-wellen in der Wandung der Rohrleitung verhindert, sieht vor, dass der Koppeladapter so ausgestaltet ist, dass die Dämpfung der Ultnaschall-Messsignale im Koppeladapter minimiert ist. Hierzu ist der Koppeladapter und/oder eine an die Dimensionierung der Rohrleitung angepasste Dämpfungsschicht so ausgestaltet, dass in der Wandung der Rohrleitung entstehende Schallwellen umgehend gedämpft werden. Insbesondere erfolgt die Dämpfung durch Einstiche bzw. Ausnehmungen in dem Koppeladapter oder in der Dämpfungsschicht. Zusätzlich oder alternativ sind in dem Material des Koppeladapters oder der Dämpfungsschicht zumindest in ausgewählten Bereichen Partikel eingelagert, die eine dämpfende Funktion haben. Bei den Partikeln handelt es sich beispielsweise um Partikel aus Wolframoxid. Durch die zuvor beschriebenen Ausgestaltungen wird das Signal-/Rauschverhältnis verbessert und somit die Messgenauigkeit des Clamp-On Durchflussmess-geräts erhöht.

Die Erfindung wird anhand der nachfolgenden Figuren näher erläutert. Es zeigt:
Fig. 1: eine schematische Darstellung eines Clamp-On Durchflussmessgeräts,
Fig. 2: eine schematische Darstellung einer Ausgestaltung des erfindungs-gemäßen Ultraschallsensors,
Fig. 3: einen Querschnitt durch einen an einer Rohrleitung befestigten Ultraschallsensor, wobei der Ultraschallsensor in einer ersten Ausgestaltung dargestellt ist,
Fig. 3a: eine Ansicht gemäß der Kennzeichnung A-A in Fig. 3,
Fig. 4 einen Querschnitt durch einen an einer Rohrleitung befestigten Ultraschallsensor, wobei der Ultraschallsensor in einer zweiten Ausgestaltung dargestellt ist, und
Fig. 4a: eine Ansicht gemäß der Kennzeichnung A-A in Fig. 4.

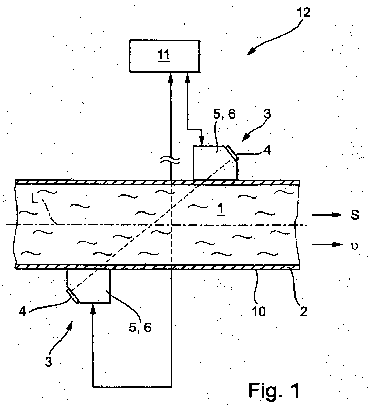

In Fig. 1 ist in schematischer Darstellung ein erfindungsgemäßes Clamp-On Durchflussmessgerät 12 mit zwei Ultraschallsensoren 3 gezeigt. Das gezeigte Durchflussmessgerät 12 ermittelt den Volumendurchfluss bzw. den Masse-durchfluss des Mediums 1 in der Rohrleitung 2 nach einem Schall-Mitnahmeverfahren, insbesondere nach dem bekannten Laufzeitdifferenz-Verfahren.

Wesentliche Komponenten des Clamp-On Ultraschall-Durchflussmessgeräts 12 sind die beiden bereits erwähnten Ultraschallsensoren 3 und die Regel-/Auswerteeinheit 11. Die beiden Ultraschallsensoren 3 sind mittels einer in den Figuren nicht gesondert dargestellten Befestigungsvorrichtung an der Wandung 10 der Rohrleitung 2 angebracht. Entsprechende Befestigungs-vorrichtungen sind aus dem Stand der Technik hinlänglich bekannt und werden u.a. von der Anmelderin angeboten und vertrieben. Die Rohrleitung 2 mit dem Innendurchmesser d und dem Außendurchmesser D wird von dem Medium 1 in Strömungsrichtung S mit der Strömungsgeschwindigkeit v durchströmt.

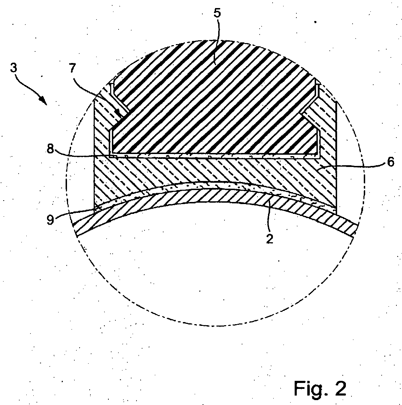

Der erfindungsgemäße Ultraschallsensor 3 weist, wie aus Fig. 2 ersichtlich, als wesentliche Bestandteile zumindest ein schallerzeugendes Element 4 auf. Bei dem schallerzeugenden Element 4 handelt es scih üblicherweise um ein piezoelektrisches Element, das die Ultraschall-Messsignale aussendet und/ oder empfängt. Desweiteren besteht der Ultraschallsensor 3 aus einem Vorlaufkörper 5 bzw. einen Koppelkeil und einen Koppeladapter 6 auf. Die Ultraschall-Messsignale werden über den Vorlaufkörper 5 und den Koppel-adapter 6 in die vom Medium 1 durchströmte Rohrleitung 2 eingekoppelt bzw. aus der Rohrleitung 2 ausgekoppelt. Anhand der Laufzeitdifferenz der Ultraschall-Messsignale in Strömungsrichtung und entgegen der Strömungsrichtung ermittelt die Regel-/Auswerteeinheit 11 den Volumen- und/oder Massedurchfluss des Mediums 1 durch die Rohrleitung 2.

In Fig. 2 ist - wie bereits erwähnt - ein erfindungsgemäßer, an einer Rohrleitung 2 befestigter Ultraschallsensor 3 schematisch dargestellt. Der Ultraschallsensor 3 besteht, wie bereits gesagt, aus einem schallerzeugenden Element 4, einem Vorlaufkörper 5 und einem Koppeladapter 6. Der dem Vorlaufkörper 5 zugewandte Endbereich des Koppeladapters 6 weist einen Befestigungsmechanismus 7 auf, der so ausgestaltet ist, dass Koppeladapter 6 und Vorlaufkörper 5 auf einfache Art und Weise voneinander gelöst und zusammengefügt werden können. Im gezeigten Fall sind die einander zugewandten Endbereiche des Koppeladapters 6 und des Vorlauf-körpers 5 so ausgestaltet, dass die Befestigung über ein Aufstecken/ Einclipsen der beiden Komponenten 5, 6 realisiert wird. Der Endbereich des Koppeladapters 6, der der Rohrleitung 2 zugewandt ist, ist in Abhängigkeit von der Rohrleitung 2 so ausgestaltet ist, dass er formschlüssig an der Rohrleitung 2 befestigbar ist. Unter Beibehaltung aller übrigen Teile lässt sich erfindungs-gemäß durch Aufstecken eines Koppeladapters 6 mit geeigneter Dimensio-nierung eine optimale Anpassung des Ultraschallsensors 3 an jeden beliebigen Durchmesser D der Rohrleitung 2 realisieren. Es versteht sich von selbst, dass auch jede andere Befestigungsart, beispielsweise ein Verschrauben der beiden Komponenten 5, 6, im Zusammenhang mit der erfindungsgemäßen Vorrichtung anwendbar ist.

Darüber hinaus lässt sich der Anteil der in die Rohrleitung 2 eingekoppelten bzw. der aus der Rohrleitung 2 ausgekoppelten Ultraschall-Messsignale durch geeignete Materialwahl optimieren. Bevorzugt sind die Rohrleitung 2, der Koppeladapter 6 und der Vorlaufkörper 5 aus dem gleichen Material gefertigt oder aber aus Materialien mit sehr ähnlichen akustischen Eigen-schaften.

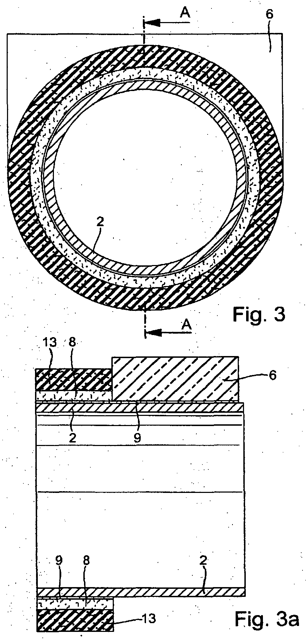

Insbesondere ist der Koppeladapter 6 in Abhängigkeit von dem Material und/oder der Geometrie der Wandung 10 der Rohrleitung 2 so ausgestaltet, dass eine Rückreflexion der Ultraschall-Messsignale bei Einkopplung in die Rohrleitung 2 bzw. bei Auskopplung aus der Rohrleitung 2 näherungsweise Null bzw. minimal ist. Gemäß einer ersten Ausgestaltung der erfindungs-gemäßen Vorrichtung 1 wird vorgeschlagen, dass eine Anpassung der Dicke von Koppeladapter 6 und der Wandung 10 der Rohrleitung 2 an die Wellenlänge der Ultraschall-Messsignale erfolgt. Im Prinzip ist die optimale Dicke von Koppeladapter 6 und Wandung 10 der Rohrleitung abhängig von dem Material - hier insbesondere von dem E-Modul, der Dichte und der Querkontraktion des Materials -, der Wellenlänge bzw. der Frequenz der Ultraschall-Messsignale und dem Einstrahl-/Ausfallwinkel, unter dem die Ultraschall-Messsignale durch die Wandung 10 in die Rohrleitung 2 bzw. aus der Rohrleitung 2 ausgestrahlt werden. Als minimale Dicke sollten Koppeladapter 6 und Wandung der Rohrleitung 2 mindestens den dreifachen Wert der Wellenlänge der Ultraschall-Messsignale aufweisen. Ist das Material beispielsweise Stahl mit einer transversalen Schallgeschwindigkeit von 3200 m/sec und haben die Ultraschall-Messsignale eine Wellenlänge von 1.6mm, so empfiehlt sich eine Dicke von Koppeladapter 6 und Wandung 10 der Rohrleitung 2 von mindestens 4.8mm. Durch diese Lösung wird sichergestellt, dass der Anteil der Ültraschall-Messsignale, die sich in der Wandung 10 der Rohrleitung 2 ausbreiten, minimal ist. Dargestellt ist dieser Fall in den Figuren Fig. 3 und Fig. 3a.

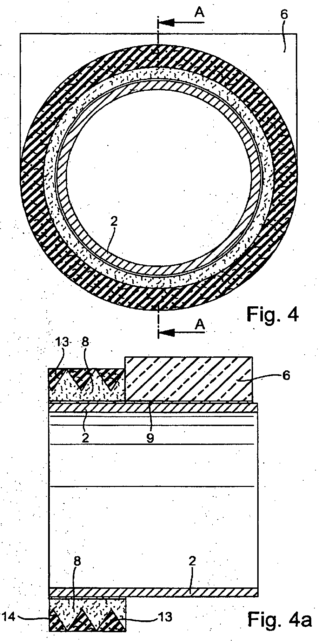

Eine alternative Ausgestaltung, die gleichfalls die Ausbildung von Transversal-wellen in der Wandung 10 der Rohrleitung 2 verhindert, sieht vor, dass der Koppeladapter 6 so ausgestaltet ist, dass die Dämpfung der Ultraschall-Messsignale im Koppeladapter 6 minimiert ist. Hierzu ist der Koppeladapter 6 und/oder dass eine an die Rohrleitung 2 angepasste Dämpfungsschicht 13 so ausgestaltet ist, dass in der Wandung 10 der Rohrleitung 2 entstehende Schallwellen stark gedämpft werden. Insbesondere erfolgt die Dämpfung durch Einstiche 14 in dem Koppeladapter 6 oder in der Dämpfungsschicht 13. Dieser Fall ist in den Figuren Fig. 4 und Fig. 4 skizziert. Zusätzlich oder alternativ sind in dem Material des Koppeladapters 6 oder der Dämpfungs-schicht 13 zumindest in ausgewählten Bereichen Partikel eingelagert, die eine dämpfende Funktion haben. Bei den Partikeln handelt es sich beispielsweise um Partikel aus Wolframoxid. Diese sind in Epoxydharz eingebettet. Durch die zuvor beschriebenen Ausgestaltungen wird das Signal-/Rauschverhältnis verbessert und somit die Messgenauigkeit des Clamp-On Durchflussmessgeräts 1 erhöht.

### Bezugszeichenliste

1 Medium
2 Rohrleitung
3 Ultraschallsensor
4 schallerzeugendes Element
5 Vorlaufkörper
6 Koppeladapters
7 Befestigungsmechanismus
8 erstes Koppelmedium / Anpassschicht
9 zweites Koppelmedium
10 Wandung der Rohrleitung
11 Regel-/Auswerteeinheit
12 Clamp-On Durchflussmessgerät
13 Dämpfungsschicht
14 Ausnehmung

## Patentansprüche

1. Vorrichtung zur Bestimmung und/oder Überwachung des Volumen- oder des Massedurchflusses eines Mediums (1), das eine Rohrleitung (2) in Richtung der Längsachse (L) der Rohrleitung (2) durchströmt, mit zumindest einem Ultraschallsensor (3), der Ultraschall-Messsignale unter einem Einstrahl-/Ausfallwinkel in die Rohrleitung (2) einstrahlt bzw. aus der Rohrleitung (2) empfängt, und mit einer Regel-/Auswerteeinheit (11), die anhand der Ultraschall-Messsignale Information über den Volumen- und/oder Massedurchfluss des Mediums (1) durch die Rohrleitung (2) bereitstellt, wobei der Ultraschallsensor (3) zumindest ein schallerzeugendes Element (4), einen Vorlaufkörper (5) und einen Koppeladapter (6) aufweist, wobei der dem Vorlaufkörper (5) zugewandte Endbereich des Koppeladapters (6) einen Befestigungsmechanismus (7) zur lösbaren Befestigung des Koppeladapters (6) am Vorlaufkörper (5) aufweist und wobei der der Rohrleitung (2) zugewandte Endbereich des Koppeladapters (6) in Abhängigkeit von der Rohrleitung (2) so ausgestaltet ist, dass er formschlüssig an der Rohrleitung (2) befestigbar ist, wobei es sich bei dem Befestigungsmechanismus (7) um einen Einklips- oder Steckmechanismus handelt.

2. Vorrichtung nach Anspruch 1,
wobei der Koppeladapter (6) an den Vorlaufkörper (5) angeschraubt ist.

3. Vorrichtung nach Anspruch 1;
wobei im Falle der Verwendung von zwei Ultraschallsensoren (3) der Koppeladapters (6) so ausgestaltet ist, dass die beiden Ultraschallsensoren (3) in einem definierten Abstand zueinander an dem Koppeladapter (6) befestigt sind.

4. Vorrichtung nach Anspruch 1 oder 3,
wobei zwischen dem Vorlaufkörper (5) und dem Koppeladapter (6) eine erste Schicht aus einem Koppelmedium (8) vorgesehen ist.

5. Vorrichtung nach Anspruch 1 oder 3,
wobei zwischen dem Koppeladapter (6) und der Rohrleitung (2) ein zweites Koppelmedium (9) vorgesehen ist.

6. Vorrichtung nach Anspruch 1 oder 3,
wobei der Koppeladapter (6) aus zwei Teilelementen (6a, 6b) besteht.

7. Vorrichtung nach Anspruch 1, 3 oder 6,
wobei der Koppeladapter (6) als fokussierende Linse ausgestaltet ist.

8. Vorrichtung nach Anspruch 1, 3, 6 oder 7,
wobei der Koppeladapter (6) und der Vorlaufkörper (5) aus dem gleichen Material oder aus Materialien mit ähnlichen akustischen Eigenschaften gefertigt sind.

9. Vorrichtung nach Anspruch 1, 3, 6 oder 7,
wobei der Koppeladapter (6) in Abhängigkeit von dem Material und/oder der Geometrie der Rohrwand (10) so ausgestaltet ist, dass die Reflexion der Ultraschall-Messsignale bei Einkopplung in die Rohrleitung (2) bzw. bei Auskopplung aus der Rohrleitung (2) näherungsweise Null bzw. minimal ist.

10. Vorrichtung nach Anspruch 1, 3, 6 oder 7,
wobei der Koppeladapter (6) so ausgestaltet ist, dass die Dämpfung der Ultraschall-Messsignale im Koppeladapter (6) minimiert ist.

11. Vorrichtung nach Anspruch 1, 3, 6 oder 7,
wobei der Koppeladapter (6) so ausgestaltet ist und/oder wobei eine an die Rohrleitung (2) angepasste Dämpfungsschicht (13) so ausgestaltet ist, dass die Ausbreitung von Rohrwellen in der Wandung (10) der Rohrleitung (2) minimiert ist.

## Claims

1. Apparatus for determining and/or monitoring the volume flow or mass flow of a medium (1), which flows through a pipe (2) in the direction of the longitudinal axis (L) of the pipe (2), with at least one ultrasonic sensor (3), which emits ultrasonic measuring signals into the pipe (2) or which receives said signals from the pipe (2) at an angle of emission/angle of reflection, and with a control/evaluation unit (11), which, using the ultrasonic measuring signals, provides information about the volume flow and/or mass flow of the medium (1) through the pipe (2), wherein the ultrasonic sensor (3) has at least one sound-generation element (4), a lead body (5) and a coupling adapter (6), wherein the end section of the coupling adapter (6) facing towards the lead body (5) has a fastening mechanism (7) for the detachable fastening of the coupling adapter (6) on the lead body (5) and wherein the end section of the coupling adapter (6) facing towards the pipe (2) is designed subject to the pipe (2) in such a way that it can be secured positively on the pipe (2), wherein the fastening mechanism (7) is a snap-in or plug-in mechanism.

2. Apparatus as claimed in Claim 1,
wherein the coupling adapter (6) is screwed onto the lead body (5).

3. Apparatus as claimed in Claim 1,
wherein, if two ultrasonic sensors (3) are used, the coupling adapter (6) is designed in such a way that the two ultrasonic sensors (3) are secured to the coupling adapter (6) at a defined distance to one another.

4. Apparatus as claimed in Claim 1 or 3,
wherein a first layer of a coupling medium (8) is provided between the lead body (5) and the coupling adapter (6).

5. Apparatus as claimed in Claim 1 or 3,
wherein a second coupling medium (9) is provided between the coupling adapter (6) and the pipe (2).

6. Apparatus as claimed in Claim 1 or 3,
wherein the coupling adapter (6) consists of two partial elements (6a, 6b).

7. Apparatus as claimed in Claim 1, 3 or 6,
wherein the coupling adapter (6) is designed as a focusing lens.

8. Apparatus as claimed in Claim 1, 3, 6 or 7,
wherein the coupling adapter (6) and the lead body (5) are made from the same material or from materials with similar acoustic properties.

9. Apparatus as claimed in Claim 1, 3, 6 or 7,
wherein the coupling adapter (6) is designed depending on the material and/or the geometries of the pipe wall (10) in such a way that the reflection of the ultrasonic measuring signals when coupled into the pipe (2) or decoupled out of the pipe (2) is close to zero or minimal.

10. Apparatus as claimed in Claim 1, 3, 6 or 7,
wherein the coupling adapter (6) is designed in such a way that minimizes the damping of the ultrasonic measuring signals in the coupling adapter (6).

11. Apparatus as claimed in Claim 1, 3, 6 or 7,
wherein the coupling adapter (6) is designed in such a way, and/or wherein a damping layer (13) adapted to the pipe (2) is designed in such a way to minimize the propagation of the waves in the wall (10) of the pipe (2).

## Revendications

1. Dispositif destiné à la détermination et/ou la surveillance du débit volumique ou massique d'un produit (1), qui parcourt une conduite (2) en direction de l'axe longitudinal (L) de la conduite (2), avec au moins un capteur à ultrasons (3), qui émet des signaux de mesure ultrasonores selon un angle d'émission / de réflexion dans la conduite (2) ou les reçoit en provenance de la conduite (2), et avec une unité de régulation / d'exploitation (11), qui met à disposition, au moyen des signaux de mesure ultrasonores, des informations sur le débit volumique et/ou massique du produit (1) à travers la conduite (2), dispositif pour lequel le capteur à ultrasons (3) présente au moins un élément générateur d'ultrasons (4), un corps d'avance (5) et un adaptateur de couplage (6), dispositif pour lequel la zone d'extrémité de l'adaptateur de couplage (6) faisant face au corps d'avance (5) comporte un mécanisme de fixation (7) destiné à la fixation amovible de l'adaptateur de couplage (6) sur le corps d'avance (5), et dispositif pour lequel la zone d'extrémité de l'adaptateur de couplage (6) faisant face à la conduite (2) est conçue en fonction de la conduite (2) de telle sorte à pouvoir être fixée mécaniquement sur la conduite (2), dispositif pour lequel il s'agit, concernant le mécanisme de fixation (7), d'un mécanisme de clipsage ou d'enfichage.

2. Dispositif selon la revendication 1,
pour lequel l'adaptateur de couplage (6) est vissé sur le corps d'avance (5).

3. Dispositif selon la revendication 1,
pour lequel, en cas d'utilisation de deux capteurs à ultrasons (3), l'adaptateur de couplage (6) est conçu de telle manière que les deux capteurs à ultrasons (3) soient fixés à une distance définie l'un par rapport à l'autre sur l'adaptateur de couplage.

4. Dispositif selon la revendication 1 ou 3,
pour lequel est prévue une première couche d'un milieu de couplage (8) entre le corps d'avance (5) et l'adaptateur de couplage (6).

5. Dispositif selon la revendication 1 ou 3,
pour lequel est prévu un deuxième milieu de couplage (9) entre l'adaptateur de couplage (6) et la conduite (2).

6. Dispositif selon la revendication 1 ou 3,
pour lequel l'adaptateur de couplage (6) est constitué de deux éléments partiels (6a, 6b).

7. Dispositif selon la revendication 1, 3 ou 6,
pour lequel l'adaptateur de couplage (6) est conçu en tant que lentille focalisante.

8. Dispositif selon la revendication 1, 3, 6 ou 7,
pour lequel l'adaptateur de couplage (6) et le corps d'avance (5) sont constitués du même matériau ou de matériaux présentant des propriétés acoustiques similaires.

9. Dispositif selon la revendication 1, 3, 6 ou 7,
pour lequel l'adaptateur de couplage (6) est conçu en fonction du matériau et/ou de la géométrie de la paroi de tube (10) de telle sorte que la réflexion des signaux de mesure ultrasonores en cas d'injection dans la conduite (2) ou en cas d'extraction de la conduite (2) est approximativement nulle ou minimale.

10. Dispositif selon la revendication 1, 3, 6 ou 7,
pour lequel l'adaptateur de couplage (6) est conçu de telle sorte que l'amortissement des signaux de mesure ultrasonores est minimisé dans l'adaptateur de couplage (6).

11. Dispositif selon la revendication 1, 3, 6 ou 7,
pour lequel l'adaptateur de couplage (6) est conçu, et/ou pour lequel une couche d'amortissement (13) adaptée à la conduite (2) est conçue de telle sorte à minimiser la propagation des ondes dans la paroi (10) de la conduite (2).
